Europäisches Patentamt

European Patent Office

Office européen des brevets

(19)

(11) Veröffentlichungsnummer: **0 281 906 B1**

## (12) EUROPÄISCHE PATENTSCHRIFT

(45) Veröffentlichungstag der Patentschrift: **24.11.93**

(51) Int. Cl.⁵: **G01J 9/02**

(21) Anmeldenummer: **88103114.0**

(22) Anmeldetag: **02.03.88**

(54) Interferometer zur Messung von optischen Phasendifferenzen.

(30) Priorität: **07.03.87 DE 3707331**

(43) Veröffentlichungstag der Anmeldung:
**14.09.88 Patentblatt 88/37**

(45) Bekanntmachung des Hinweises auf die
Patenterteilung:
**24.11.93 Patentblatt 93/47**

(84) Benannte Vertragsstaaten:
**CH DE FR GB LI**

(56) Entgegenhaltungen:
**EP-A- 0 194 941**
**DE-A- 1 085 350**
**DE-B- 1 547 403**
**US-A- 4 468 122**

**OPTICAL ENGINEERING, vol. 23, no. 4, Juli
1984, Bellingham,US, Seiten 401-405;
T.Yatagai et al: "Automatic flatness tester for
very large scale integrated circuit wafers"**

**APPLIED OPTICS, vol. 24, no. 18, September
1985, New York,US, Seiten 3059-3061;
J.Schwider et al: "Homogeneity testing by
phase sampling interferometry"**

**IBM TECHNICAL DISCLOSURE BULLETIN, vol.**
**24, no. 5, Oktober 1981, Seiten 2660-2662;
G.Makosch et al: "Automatic evaluation of
interference patterns"**

(73) Patentinhaber: **Firma Carl Zeiss**

**D-73446 Oberkochen(DE)**

(84) Benannte Vertragsstaaten:
**CH DE FR LI**

(73) Patentinhaber: **CARL ZEISS-STIFTUNG HAN-
DELND ALS CARL ZEISS**

**D-7920 Heidenheim (Brenz)(DE)**

(84) Benannte Vertragsstaaten:
**GB**

(72) Erfinder: **Küchel, Michael, Dr.-Ing.**
**Keplerstrasse 3**
**D-7082 Oberkochen(DE)**

**Beschreibung**

Die vorliegende Erfindung betrifft ein Interferometer zur Messung von optischen Phasendifferenzen, wobei zwischen zwei Teilstrahlen in einem Meßteil ein optischer Wegunterschied entsteht, mit einer Lichtquelle für kohärente Strahlung, mindestens einem ortsauflösenden Empfänger und mit mindestens einer optischen Verzögerungseinrichtung, die den Strahlengang in zwei Teilstrahlen aufspaltet, zwischen den Teilstrahlen einen optischen Wegunterschied erzeugt und anschließend wieder kongruent zusammenführt.

Hierbei bezieht sich die Formulierung "zwei Teilstrahlen in einem Meßteil" auf die tatsächlich ausgenutzten Strahlengänge. Durch Mehrfachreflektionen können weitere Strahlengänge auftreten, die jedoch unwesentlich sind und höchstens Störeffekte verursachen. Der Ausdruck kohärente Strahlung wird hier - so wie häufig - für Strahlung mit einer Kohärenzlänge verwendet, die zur Erzeugung von Interferenzen geeignet ist.

Interferometer zur Messung von optischen Phasendifferenzen werden z.B. zur quantitativen Prüfung von optischen Oberflächen verwendet, indem die Prüffläche und die Referenzfläche auf einen ortsauflösenden Empfänger abgebildet werden, wobei ein Interferenzmuster entsteht. Wenn die Referenzfläche in Richtung der auftreffenden Strahlung um eine halbe Wellenlänge bewegt wird, dann erfolgt für jeden Punkt des Interferenzmusters ein sinusförmiger Intensitätsverlauf. Diese Intensitätsverläufe können z.B. in einem Computer als Funktion der Bewegung der Referenzfläche gespeichert werden und für jeden Punkt des Interferenzmusters bzw. der Prüffläche wird die bestmögliche Einpassung einer Sinuskurve ermittelt. Die Phasenlage jeder einzelnen Sinuskurve ergibt dann bei Berücksichtigung der Wellenlänge der verwendeten Lichtquelle unmittelbar (bezogen auf die Referenzfläche) die Formabweichung des zugehörigen Punktes der Prüffläche.

Aus einer Veröffentlichung von R.C.Moore e.a. (Applied Optics 18 (13), 2196 (1980)) sind derartige Interferometer nicht nur für die optische Prüfung von planen Flächen, sondern such für sphärische Flächen bekannt. Wegen des einfacheren Aufbaus wird dabei an Stelle der früheren üblichen Twyman-Green Anordnung in jüngster Zeit die Fizeau-Anordnung immer mehr bevorzugt. Bei letzterer befinden sich Prüf- und Referenzfläche nicht in getrennten Interferometerzweigen, sondern in demselben Interferometerzweig, wobei sie durch einen meist keilförmigen Luftspalt voneinander getrennt sind. Durch die Fizeau-Anordnung wird der Interferometeraufbau erheblich einfacher, und nur die Referenzfläche muß mit hoher optischer Präzision gefertigt werden.

Bei den bekannten Anordnungen muß z.B. die Referenzfläche um eine halbe oder wenige Wellenlängen mit hoher Ortsauflösung und streng geradlinig bewegt werden, um die Phasendifferenzen zwischen Referenz- und Prüffläche zu verändern. Dazu sind piezoelektrische Einstellvorrichtungen üblich. Für große Prüfflächen, die entsprechend große Referenzflächen erfordern, ist diese Methode sehr aufwendig und ab einer gewissen Größe nicht mehr realisierbar. Bei sphärischen Referenzflächen ist darüber hinaus die erzeugte Phasendifferenz abhängig vom Aperturwinkel des jeweiligen Strahls, d.h. sie ist nicht gleich für alle Punkte des Inteferogramms.

Aus der DE-A 1 085 350 sind Interferometer bekannt, bei denen ein Teilstrahl, z.B. der Referenzstrahl durch Zwischenschalten einer doppelbrechenden Platte in zwei zueinander senkrecht polarisierte Teilstrahlen aufgeteilt wird, die anschließend wieder überlagert werden. Die aufgeteilten Teilstrahlengänge durchlaufen unterschiedliche optische Weglängen, wobei der Weglängenunterschied durch Drehen der doppelbrechenden Platte variabel ist.

Die Verwendung von doppelbrechenden Platten im Meß- oder Referenzstrahlengang ist jedoch häufig unpraktikabel, da insbesondere bei der Vermessung großflächiger Prüflinge entsprechend großflächige doppelbrechende Platten, die nicht oder nicht mit der erforderlichen Qualität herstellbar sind, erforderlich wären.

Aus einer Veröffentlichung von R. Smythe e.a. (Optical Engineering 23 (4), 361 (1984)) ist ferner ein Michelson-Interferometer zur Messung von optischen Phasendifferenzen bekannt, bei dem keine zeitliche Veränderung der relativen Phasenlage zwischen Referenzwelle und Prüfwelle erfolgt, sondern bei dem statt dessen mit mehreren ortsauflösenden Empfängern gleichzeitig mehrere Interferogramme gemessen werden, die sich in der relativen Phasenlage zwischen Referenzwelle und Prüfwelle in definierter Weise unterscheiden. Zur "Markierung" der Phase wird hierbei das Licht in den beiden Teilarmen des Michelson-Interferometers verschieden polarisiert. Der "Signal Decoder" nützt diese "Markierung" von Prüfwelle und Referenzwelle aus, um durch weitere polarisationsaktive Bauelemente mehrere (meist 3 oder 4) Interferogramme zu erzeugen, die sich in der relativen Phasenlage zwischen Prüfwelle und Referenzwelle in definierter Weise unterscheiden.

Dieses Verfahren ist jedoch bei einem Fizeau-Interferometer nicht anwendbar, da für dieses keine Methode bekannt ist, mit der Referenz- und Prüfstrahl verschieden polarisiert werden können.

Der vorliegenden Erfindung liegt nun die Aufgabe zugrunde, Vorrichtungen anzugeben, welche nicht die aufgeführten Beschränkungen haben und trotzdem Referenz- und Prüfstrahl in unterschiedlicher Weise derart beeinflussen, daß mehrere Interferogramme, die sich in der relativen Phasenlage zwischen den interferierenden Teilstrahlen in definierter Weise unterscheiden, zeitlich nacheinander oder räumlich nebeneinander entstehen.

Die gestellte Aufgabe wird erfindungsgemäß dadurch gelöst, daß die Kohärenzlänge der Lichtquelle kleiner ist als der optische Wegunterschied zwischen den beiden Teilstrahlen im Meßteil und daß der in der optischen Verzögerungseinrichtung erzeugte Wegunterschied ungefähr gleich dem optischen Wegunterschied der Teilstrahlen im Meßteil des Interferometers so gewählt ist, daß die Differenz der optischen Wegunterschiede betragsmäßig kleiner als die Kohärenzlänge der Lichtquelle ist.

In einer bevorzugten Ausführungsform der Erfindung ist der optische Wegunterschied der Verzögerungseinrichtung um Bruchteile der Wellenlänge der Lichtquelle reproduzierbar veränderbar. Die optischen Bauteile der Verzögerungseinrichtung können unabhängig von der Größe der Referenz- und Prüffläche klein gehalten werden, so daß auch bei sehr großen Referenz- und und Prüfflächen durch die Erfindung die bekannten Einstellvorrichtungen für eine reproduzierbare Änderung des optischen Wegunterschieds verwendet werden können.

In einer anderen bevorzugten Ausführungsform sind mehrere ortsauflösende Empfänger zur gleichzeitigen Messung von mehreren Interferogrammen mit verschiedenen Phasenlagen vorhanden. Dabei sind polarisationsoptische Mittel vorgesehen, durch welche die in der Verzögerungseinrichtung unterschiedlich verzögerten Teilstrahlen unterschiedlich polarisiert werden. Die Erfindung ermöglicht daher, die Vorteile einer gleichzeitigen Messung von mehreren Interferogrammen mit fester Phasenbeziehung zueinander auszunutzen, ohne daß polarisationsoptische Mittel im Meßteil des Interferometers erforderlich sind. Damit können die Vorteile der hohen Unempfindlichkeit gegenüber Erschütterungen bzw. die Messung schnell veränderlicher Vorgänge bei zahlreichen Interferometertypen angewendet werden.

In einer weiteren bevorzugten Ausführungsform der Erfindung sind bei mehreren ortsauflösenden Empfängern mindestens zwei optische Verzögerungseinrichtungen vorgesehen, die auf feste Phasendifferenzen gegeneinander einstellbar oder eingestellt sind. Dabei sind bei weniger als drei optischen Verzögerungseinrichtungen optische Mittel zur Erzeugung von Strahlengängen mit weiteren Phasendifferenzen vorhanden. Die Erfindung ermöglicht daher, die Vorteile einer gleichzeitigen Messung von mehreren Interferogrammen mit fester Phasenbeziehung zueinander auszunutzen, ohne daß im gesamten Interferometer polarisationsoptische Mittel erforderlich sind. Damit können die Vorteile der hohen Unempfindlichkeit gegenüber Erschütterungen bzw. die Messung schnell veränderlicher Vorgänge auch bei Interferometern angewendet werden, bei denen Polarisation stören würde.

Weitere vorteilhafte Ausgestaltungen der Erfindung gehen aus den abhängigen Ansprüchen und den beschriebenen Ausführungsbeispielen hervor.

Die Erfindung wird im folgenden anhand von in den Figuren 1 bis 9 dargestellten Ausführungsbeispielen näher erläutert. Dabei zeigen:

Fig. 1 eine Fizeau-Anordnung;

Fig. 2 eine Anordnung mit einer Planplatte, die der Fizeau-Anordnung ähnlich ist;

Fig. 3 eine Anordnung zur Prüfung von asphärischen Oberflächen;

Fig. 4 eine weitere Anordnung zur Prüfung von asphärischen Oberflächen;

Fig. 5 eine Anordnung zur Prüfung einer Keilplatte;

Fig. 6 eine Fizeau-Anordnung mit unterschiedlich polarisierten Teilstrahlen und vier ortsauflösenden Empfängern;

Fig. 7 eine weitere Fizeau-Anordnung mit vier ortsauflösenden Empfängern;

Fig. 8 ein laterales Scherinterferometer mit vier ortsauflösenden Empfängern;

Fig. 9 eine Mach-Zehnder-Anordnung.

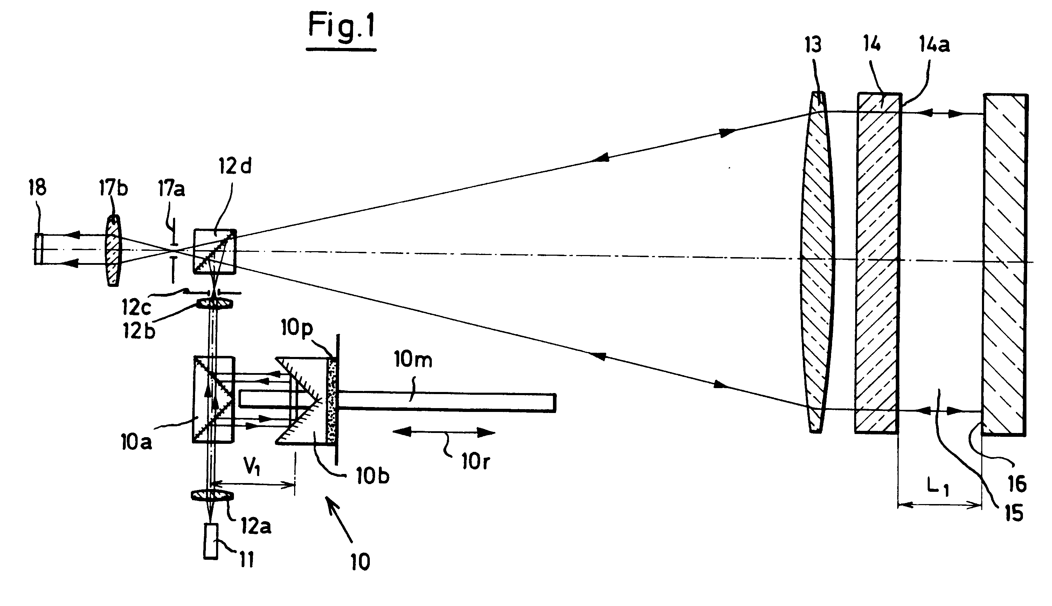

In der Figur 1 ist ein Interferometer dargestellt, das abgesehen von der Verzögerungseinrichtung (10) der bekannten Fizeau-Anordnung entspricht. Die von der Lichtquelle (11), z.B. einem Halbleiter-Laser, ausgehende Strahlung wird durch die Linsen (12a,12b) und die Blende (12c) mit einem passenden Öffnungswinkel versehen, an dem Teilerwürfel (12d) reflektiert und von der Linse (13) wieder parallel gemacht. Die parallele Strahlung durchsetzt dann die Planplatte (14) mit der Referenzfläche (14a), von welcher ein Teil der Strahlung reflektiert wird. Der andere Teil der Strahlung passiert den Luftspalt (15) mit der optischen Weglänge $nL_1$ und ein weiterer Teil wird an der Prüffläche (16) reflektiert. Die beiden reflektierten Strahlen gehen dann durch die Linse (13), den Teilerwürfel (12d), eine Blende (17a) und eine Linse (17b) bis zu dem ortsauflösenden Empfänger (18). Dabei werden durch die Linsen (13 und 17b) die Prüffläche (16) und die Referenzfläche (14a) auf dem Empfänger (18) abgebildet, wobei auf dem Empfänger ein Interferenzmuster entsteht, das z.B. in der in der Einleitung beschriebenen bekannten Weise ausgewertet werden kann.

Die für die vorliegende Erfindung wichtige Verzögerungseinrichtung (10) besteht aus den Teilerwürfeln (10a) sowie einem 90°-Winkelspiegel (10b), welcher in den Richtungen (10r) auf einer mechanischen Führung (10m) grob und mit einem Piezoelement (10p) fein verstellt werden kann. Diejenigen Strahlen, welche über den Winkelspiegel (10b) laufen, haben gegenüber den übrigen Strahlen einen optischen Wegunterschied von $2nV_1$, wobei n die Brechzahl der Luft und $2V_1$ die zusätzliche Weglänge durch die Verzögerungsstrecke ist.

Die von der Lichtquelle (11) ausgehende Strahlung kann auf vier verschiedene optischen Wegen OP zum Empfänger (18) gelangen: $OP_1$ ohne Wegunterschied $2nV_1$, ohne Luftspalt $2nL_1$

$OP_2$ mit Wegunterschied $2nV_1$, ohne Luftspalt $2nL_1$

$OP_3$ ohne Wegunterschied $2nV_1$, mit Luftspalt $2nL_1$

$OP_4$ mit Wegunterschied $2nV_1$, mit Luftspalt $2nL_1$

Der 90°-Winkelspiegel wird auf der mechanischen Führung (10m) so positioniert, daß für die Differenz der optischen Wege $OP_2$ und $OP_3$ gilt

$$|OP_2 - OP_3| \ll KL$$

wobei KL die Kohärenzlänge der Strahlung der Lichtquelle (11) ist. Für alle anderen möglichen Differenzen der optischen Weglängen gilt jedoch

$$|OP_1 - OP_2| \gg KL$$
$$|OP_1 - OP_3| \gg KL$$
$$|OP_1 - OP_4| \gg KL$$
$$|OP_2 - OP_4| \gg KL$$
$$|OP_3 - OP_4| \gg KL$$

Durch geeignete Wahl der Kohärenzlänge der Lichtquelle (11), sowie der Länge $L_1$ des Luftspaltes (15) und der Länge $V_1$ der Verzögerungseinrichtung (10) läßt sich also erreichen, daß das Interferenzmuster auf dem Empfänger (18) nur durch Interferenz zwischen den Teilstrahlen mit den optischen Wegen $OP_2$ und $OP_3$ entsteht. Die anderen Teilstrahlen tragen nichts zum Interferenzmuster bei, sondern bewirken lediglich eine Kontrasteinbuße, die jedoch wegen der photoelektrischen Messung der Bestrahlungsstärke und der Art der anschließenden Auswertung akzeptiert werden kann. Die Aufnahme von mindestens drei Interferogrammen erfolgt mit der in der Einleitung beschriebenen, bekannten Methode, wobei das Piezoelement (10p) zur Änderung der Phasendifferenzen verwendet wird.

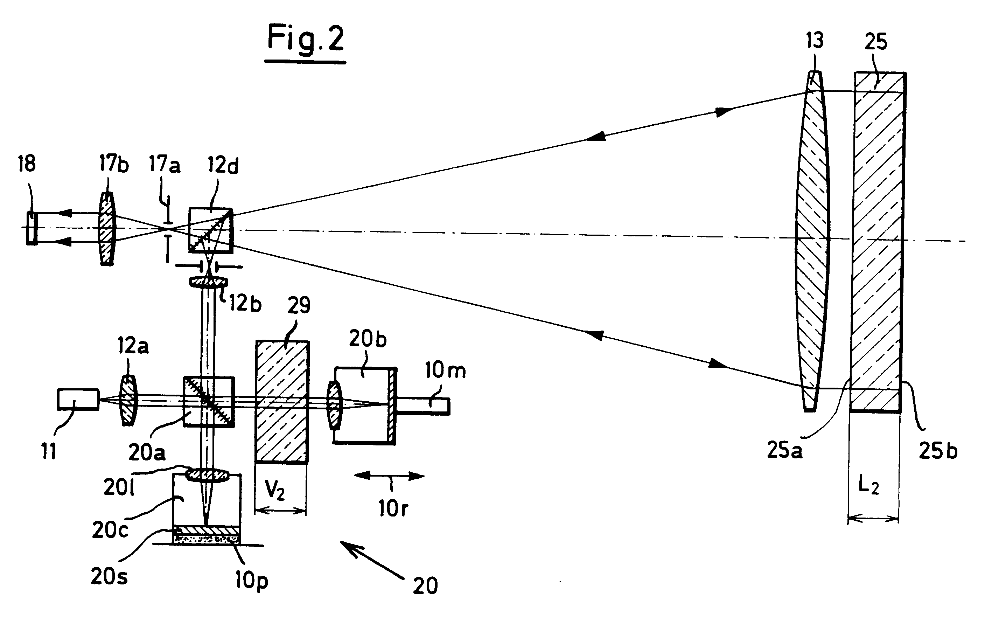

In Figur 2 ist eine Anordnung dargestellt, die der Fizeau-Anordnung ähnlich ist. Ein Vorteil der Erfindung ist, daß der Abstand zwischen Prüffläche und Referenzfläche nicht verändert wird. Daher können mit ihr auch Planplatten auf ihre Planparallelität geprüft werden. Mit der Anordnung von Figur 2 werden die optischen Phasendifferenzen zwischen den Flächen (25a) und (25b) der Planplatte (25) gemessen, die dazu nach der Sammellinse (13) angeordnet ist. Die optische Verzögerungseinrichtung (20) besteht in diesem Fall in einer besonders vorteilhaften Ausführungsform aus einem Teilerwürfel (20a) und zwei Retroreflexionseinrichtungen (20b,20c). Letztere sind aus je einer Sammellinse (20l) und einem Spiegel (20s) in der Fokusebene der Sammellinse aufgebaut und haben die Eigenschaft, daß sie auf sie auftreffende Parallelstrahlen unabhängig vom Einfallswinkel in sich selbst reflektieren. Die Retroreflexionseinrichtung (20b) ist auf der mechanischen Führung (10m) grob verstellbar und die Retroreflexionseinrichtung (20c) ist mit einem Piezokristall (10p) fein verstellbar. Im Strahlengang vor der Retroreflexionseinrichtung (20b) ist eine Planplatte (29) angeordnet, welche eine Verzögerung von $2nV_2$ bewirkt, wobei n die Brechzahl der Planplatte (29) ist. Die Planplatte (29) sollte aus der gleichen Glassorte und in der gleichen Dicke wie die zu prüfende Planplatte (25) angefertigt sein, damit das Interferenzmuster auf dem Empfänger (18) möglichst kontrastreich wird.

Die Einhaltung dieser Forderungen an die Planplatte (29) ist allerdings keineswegs kritisch. Es ist sogar möglich, auf die Planplatte (29) ganz zu verzichten und die Verzögerungseinrichtung (10) von Figur 1 zu verwenden, denn wenn die Strahlung der Lichtquelle (11) z.B. eine Halbwertsbreite von ca. 0,1 nm und entsprechend eine Kohärenzlänge von ca. 4 mm hat, erhält man ohne Planplatte (29) zwar einen deutlich geringeren Kontrast des Interferenzmusters, der jedoch in vielen Anwendungsfällen noch zu verkraften ist. Selbstverständlich muß in diesem Fall dafür gesorgt werden, daß der optische Wegunterschied der beiden Teilstrahlengänge der Verzögerungseinrichtung (im Falle von Figur 1 ist dieser $2nV_1$) gleich der doppelten

optischen Weglänge 2nL$_2$ der Planplatte (25) wird.

Auch bei der Anordnung nach Figur 2 kann die von der Lichtquelle ausgehende Strahlung auf vier verschiedenen optischen Wegen zum Empfänger gelangen. Für eine geeignete Wahl der Kohärenzlänge und die übrigen Bedingungen gelten die Ausführungen zu Figur 1 entsprechend.

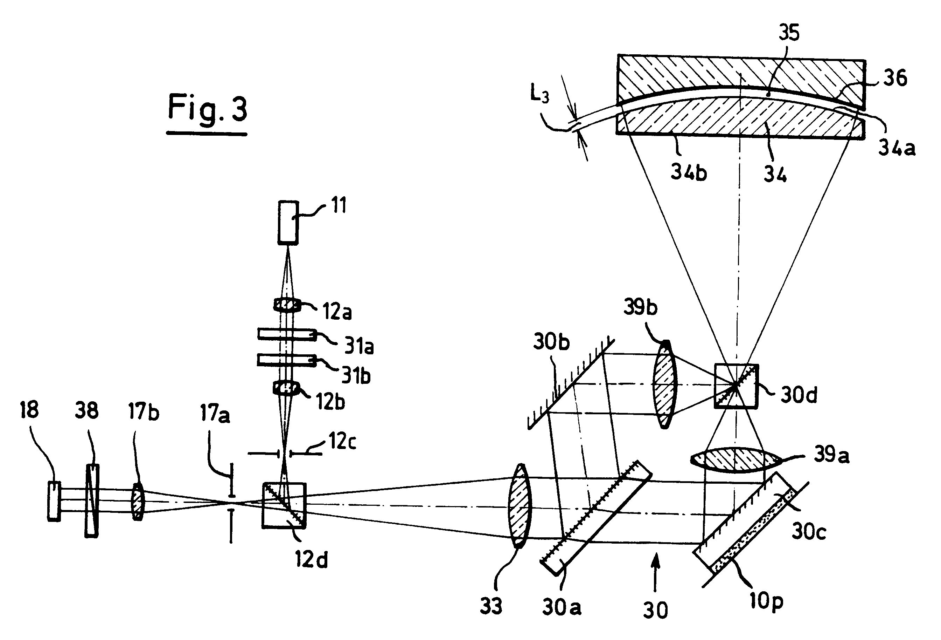

In Figur 3 ist ein weiteres Ausführungsbeispiel dargestellt, bei dem eine asphärische Fläche (34a) gegen eine sphärische Referenzfläche (36) geprüft wird und bei dem die Verzögerungseinrichtung (30) nicht im Beleuchtungsteil angeordnet ist.

Der von der Lichtquelle (11) herkommende Strahl wird von der Linse (12a) kollimiert, durch einen Polarisator (31a) linear polarisiert (falls die Lichtquelle nicht schon polarisiertes Licht abstrahlt) und dann wird die Schwingungsrichtung des Lichtes durch eine Lambdahalbe-Platte (31b) so eingestellt, daß sie unter 45° zur Zeichenebene liegt. Die Linse (12b) bildet die Lichtquelle auf die kleine Blende (12c) ab und das Licht wird vom Teilerwürfel (12d) zur Linse (33) gelenkt, die den Strahl wieder kollimiert. Das von der Linse erzeugte Parallellichtbündel wird in der Verzögerungseinrichtung (30) von einem Polarisationsstrahlteiler (30a) in ein zur Zeichenebene senkrecht polarisiertes Teillichtbündel, das zum Spiegel (30b) geht, und in ein zur Zeichenebene parallel polarisiertes Teillichtbündel, das zum Spiegel (30c) geht, aufgespalten. Diese Teillichtbündel laufen über getrennte Linsen (39a und 39b) und werden anschließend in einem Polarisationsstrahlteiler (30d) wieder zusammengeführt. Der weitere Aufbau entspricht vollständig einem Fizeau-Interferometer mit einem Luftspalt (35) mit der optischen Weglänge nL$_3$ zwischen Prüffläche (34a) und Referenzfläche (36).

Für die zurücklaufenden Strahlen bewirkt der Polarisationsstrahlteiler (30d) die Aufteilung in die richtigen Teillichtbündel innerhalb der Verzögerungseinrichtung (30). Zwischen der Linse (17b) und dem Empfänger (18) sorgt ein Analysator (38) dafür, daß die beiden zeitlich kohärenten Wellen, die die gewünschte Interferenzerscheinung bewirken können, den gleichen Polarisationszustand erhalten und damit interferieren können.

In diesem Ausführungsbeispiel ergibt sich der optische Wegunterschied der Verzögerungseinrichtung (30) aus der Differenz der Lichtwege über die Spiegel (30b und 30c); er kann daher in Figur 3 nicht als Strecke gekennzeichnet werden. Der Polarisationsstrahlteiler (30a) und der Spiegel (30b) werden so einjustiert, daß der optische Wegunterschied der Summe der optischen Lichtwege von Polarisationsstrahlteiler (30a) über Spiegel (30b), durch die Linse (39b) bis zur Teilerfläche des Polarisationsstrahlteilers (30d) einerseits und der Summe der optischen Lichtwege von Polarisationsstrahlteiler (30a) über Spiegel (30c) durch die Linse (39a) bis zur Teilerfläche des Polarisationsstrahlteilers (30d) andererseits der optischen Weglänge nL$_3$ im Luftspalt (35) zwischen den Flächen (34a und 36) entspricht. Der zusätzliche Lichtweg nach der Reflexion der Welle an der Fläche (36) wird dann bei der Rückkehr des Lichtes in der Verzögerungseinrichtung (30) kompensiert, bevor die Strahlen durch den polarisationsoptischen Strahlteiler (30a) wieder vereinigt werden. Die definierte Veränderung des optischen Wegunterschiedes um Bruchteile einer Wellenlänge erfolgt wieder mit einem Piezoelement (10p), das den Spiegel (30c) bewegt. Auch in diesem Fall kann die von der Lichtquelle ausgehende Strahlung wieder auf vier verschiedenen optischen Wegen zum Empfänger gelangen, die sich jedoch in der Verzögerungseinrichtung (30) durch ihre Polarisationsebenen unterscheiden. Für eine geeignete Wahl der Kohärenzlänge und die übrigen Bedingungen gelten daher wieder die Ausführungen zur Figur 1 entsprechend.

Die Anordnung der Linsen (39a und 39b) innerhalb der Verzögerungseinrichtung (30) hat den großen Vorteil, daß die Linse (39b) nur zusammen mit der Prüffläche (34a) und daß die Linse (39a) nur zusammen mit der Referenzfläche (36) für die Interferenzerscheinung wirksam wird. Auf diese Weise ist es möglich, die asphärische Prüffläche (34a) mit einer sphärischen Referenzfläche (36) zu prüfen. Die Linse (39b) wird so ausgelegt, daß sie die eintretende Planwelle in eine Welle transformiert, die nach Durchgang durch den Strahlteiler (30d) und die Eintrittsfläche (34b) der asphärischen Linse (34) am Ort der Fläche (34a) die Form dieser asphärischen Fläche annimmt. Die Linse (39a) wird so ausgelegt, daß sie die eintretende Planwelle in eine Welle transformiert, die nach Durchgang durch den Strahlteiler (30d) und nach Durchgang durch die gesamte asphärische Linse (34) und den Luftspalt (35) am Ort der sphärischen Referenzfläche (36) die Form dieser Fläche annimmt.

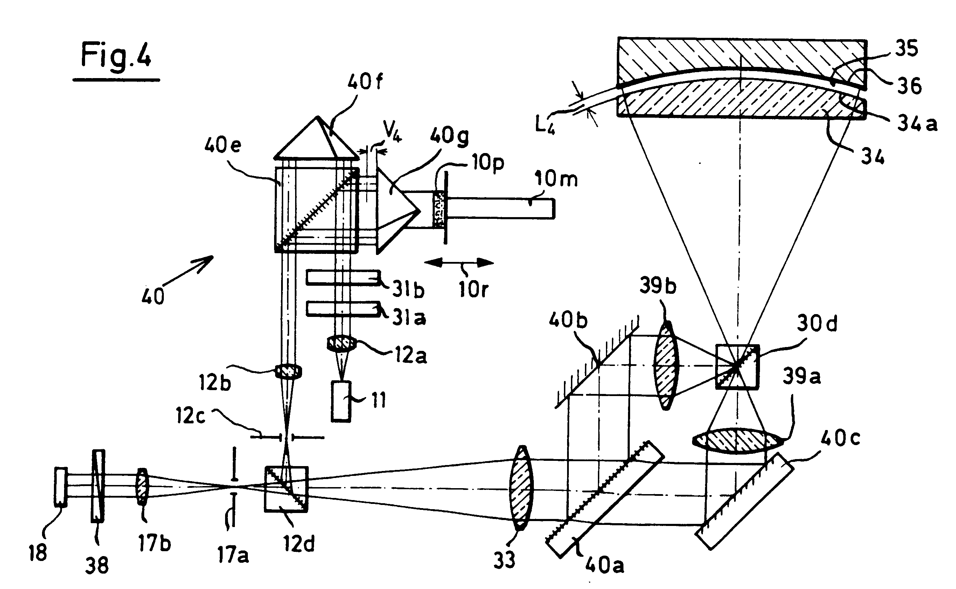

Mit dem Beispiel der Figur 3 wurde gezeigt, daß es in manchen Fällen sehr vorteilhaft sein kann, wenn sich die an der Prüffläche und der Vergleichsfläche reflektierten zeitlich kohärenten Wellen zusätzlich durch ihre Polarisation unterscheiden. In der Anordnung nach Figur 3 erfüllt die Verzögerungseinrichtung (30) beide Funktionen, nämlich Verzögerung des optischen Weges zur Kompensation des Luftspaltes (35) mit der Möglichkeit der definierten Veränderung des optischen Wegunterschiedes um Bruchteile einer Wellenlänge einerseits und "Markierung" der Wellen durch ihre Polarisation andererseits, gleichzeitig. In Figur 4 wird gezeigt, daß diese Funktionen auch getrennt werden können.

In Figur 4 ist hinter der Lichtquelle (11) und der Kollimationslinse (12a) eine weitere Ausführungsform einer optischen Verzögerungseinrichtung (40) dargestellt, die aus einem polarisationsoptischen Strahlteilerwürfel (40e) und zwei Tripelprismen (oder Tripelspiegel) (40f und 40g) besteht. Zur Kompensation des optischen Wegunterschiedes, den die Wellen in den hintereinandergeschalteten Interferometern, d.h. dem Mach-Zehnder Interferometer aus den Bauteilen (40a,40b,40c,39a,39b, 30d) und dem Fizeau-Interferometer aus den Bauteilen (34 und 36) erfahren, kann das Tripelprisma (40g) auf einer Führungsbahn (10m) entlang der Richtung (10r) um die Strecke V$_4$ verschoben werden. Die definierte Veränderung des optischen Wegunterschiedes um Bruchteile einer Wellenlänge erfolgt wieder mit dem Piezoelement (10p), welches das Tripelprisma (40g) bewegt.

Der von der Lichtquelle (11) und der Linse (12a) herkommende Strahl wird zunächst durch einen Polarisator (31a) linear polarisiert, falls die Lichtquelle nicht schon polarisiertes Licht abstrahlt, und dann wird die Schwingungsrichtung des Lichtes durch eine Lambdahalbe-Platte (31b) so eingestellt, daß sie unter 45° zur Zeichenebene liegt. Der polarisationsoptische Strahlteiler (40e) reflektiert dann die Komponente, die senkrecht zur Einfallsebene (Zeichenebene) schwingt, zum Tripelprisma (40g) und transmittiert die Komponente, die parallel zur Einfallsebene schwingt, zum Tripelprisma (40f). Die Rückmischung nach der Verzögerung des Teilstrahls mit senkrechter Schwingungsrichtung erfolgt verlustfrei, wenn die Tripelprismen den jeweiligen Polarisationszustand nicht verändern. Es ist daher günstig, die reflektierenden Flächen mit Silberschichten zu bedampfen oder Tripelspiegel zu verwenden.

Die Anordnung und Funktion aus den Bauteilen (12a,12b,12c,12d, 33,17a,17b und 18) entspricht der schon in Figur 1 und Figur 2 beschriebenen. Insbesondere ist auch hier der Teilerwürfel (12d) nicht polarisationsaktiv. Die Baugruppe aus den Bauteilen (40a,40b,40c,39a,39b,30d), die eine spezielle Ausführungsform eines "polarisationsaktiven" Mach-Zehnder Interferometers darstellt, kann als ein Spezialvorsatz angesehen werden, der es erlaubt, konvexe asphärische Flächen mit konkaven sphärischen Flächen (oder, wie der Fachmann leicht sieht, auch umgekehrt konkave asphärische Flächen gegen konvexe sphärische Flächen) in einer nachgeschalteten Fizeau-Anordnung zu vergleichen. Durch diesen "modularen" Aufbau ergeben sich vielseitige Einsatzmöglichkeiten. Die Aufspaltung und Wiedervereinigung der orthogonal polarisierten (und gleichzeitig verschieden verzögerten) Wellen im Mach-Zehnder-Interferometer erfolgt verlustfrei mit den Bauteilen (40a und 30d) sowohl vor als auch nach der Reflexion der Wellen an den Flächen (34a und 36). Ein vor der dem ortsauflösenden Empfänger (18) angeordneter Analysator (38), dessen Durchlaßrichtung unter 45° zur Zeichenebene eingestellt ist, oder bei unterschiedlichen Reflexionsgraden der Flächen (34a und 36) auch unter einem anderen Winkel, sorgt wiederum dafür, daß die zeitlich kohärenten Wellen gleichen Polarisationszustand erhalten und interferieren können.

Die in Figur 4 gezeigte Verzögerungseinrichtung (40) kann ersetzt werden durch die in Figur 1 gezeigte Verzögerungseinrichtung (10), wenn dort zwischen die Linse (12a) und den Strahlteiler (10a) der Polarisator (31a) und die Lambdahalbe-Platte (31b) eingefügt werden und die Teilerschichten im Prisma (10a) polarisierend sind. Ebenso gut kann die in Figur 2 gezeigte Verzögerungseinrichtung (20) zu einer polarisations-optisch wirksamen Verzögerungseinrichtung modifiziert werden. Dazu sind neben (31a,31b) noch zwei Lambdaviertel-Platten notwendig, die zwischen den Teilerwürfel (20a) und die Retroreflexionseinrichtungen (20b und 20c) eingesetzt werden. Der Teilerwürfel (20a) muß dann natürlich ein polarisierender Teilerwürfel sein. Dem Fachmann wird klar sein, daß es mit Hilfe dieser Beispiele leicht möglich ist, weitere Anordnungen anzugeben, mit denen eine gleichzeitige "Markierung" der Strahlen durch den optischen Lichtweg und durch den Polarisationszustand erfolgt.

Erwähnt werden soll noch eine Möglichkeit, wie die definierte Veränderung des optischen Wegunterschiedes um Bruchteile einer Wellenlänge oder damit gleichbedeutend die definierte Veränderung des optischen Phasenunterschiedes der interferierenden Wellen um Bruchteile von 2pi bewerkstelligt werden kann. Bisher wurden hierfür mechanische Verschiebungen von Bauteilen durch Piezoelemente genannt; in den Anordnungen nach Figur 1 oder Figur 4 ist es jedoch leicht möglich, in einen Arm der Verzögerungseinrichtung (40) eine rotierende Lambdahalbe-Platte einzufügen, die zwischen zwei feststehenden Lambdaviertel-Platten steht. Bei einer vollen Umdrehung der Lambdahalbe-Platte wird dann die optische Phasendifferenz um 4pi geändert. In der Verzögerungseinrichtung (20) von Figur 2 könnte statt dessen in einem Arm eine feststehende und eine rotierende Lambdaviertel-Platte verwendet werden.

Im folgenden werden zwei weitere Beispiele beschrieben, die zeigen, wie nützlich die Kombination der "Markierung" der Wellen durch zeitliche Verzögerung und Polarisation ist. Das erste Beispiel stellt sich die Aufgabe, ähnlich wie in Figur 2 Vorder- und Rückfläche einer massiven Platte gegeneinander zu vergleichen, diesmal jedoch unter der Annahme, daß die Flächen einen Keilwinkel einschließen.

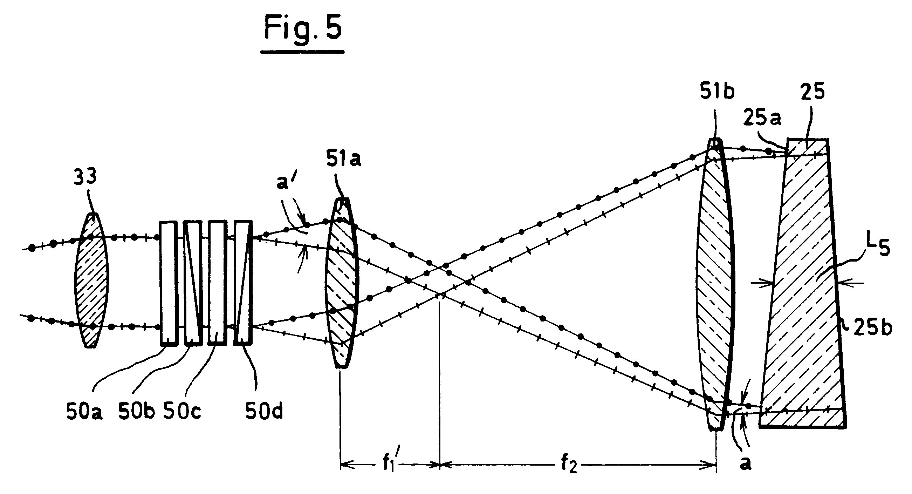

Die in Figur 5 dargestellte Anordnung ist als ein weiterer "Vorsatz" zu verstehen, der anstelle der Bauteile (40a) usw. vor die Linse (33) der Anordnung nach Figur 4 gestellt werden kann. Dieser Vorsatz enthält die beiden Lambdahalbe-Platten (50a und 50c), die beiden Wollaston-Prismen (50b und 50d), das afokale Kepler-Fernrohr mit dem Okular (51a) und dem Objektiv (51b) sowie dem Prüfling (25) mit den beiden Flächen (25a und 25b). Der optisch wirksame Keilwinkel a der Keilplatte (25) wird von dem Fernrohr zu dem Keilwinkel $a' = af_2/f_1'$ vergrößert. Mit den beiden Wollaston-Prismen und den beiden Lambdahalbe-Platten ist es möglich, zwei Planwellen zu erzeugen, die den Winkel $a'$ einschließen und jeweils linear polarisiert sind, mit senkrecht aufeinanderstehenden Schwingungsrichtungen. Durch Verdrehen der Komponenten (50a,50b und 50d) ist es möglich, $a'$ in gewissen Grenzen ($-a'_{max} \leq a' \leq a'_{max}$) stufenlos zu verändern. Die beiden orthogonal polarisierten Bündel, die den Winkel $a'$ einschließen, treten in das Fernrohr ein und schließen nach Verlassen des Fernrohrs den Winkel a ein. Das Bündel mit der Polarisation senkrecht zur Zeichenebene der Figur 5 (vor Eintritt in die Lambdahalbe-Platte (50a)) hat dabei zuvor in der Verzögerungseinrichtung eine Verzögerung $2nV_4$ erhalten, die ungefähr dem optischen Weg $2nL_5$ entspricht. Das zu diesem Bündel gehörige Bündel nach dem Kepler-Fernrohr (dessen Schwingungsrichtung im allgemeinen Fall nicht mehr senkrecht zur Zeichenebene ist) trifft senkrecht auf die Vorderfläche (25a) der Keilplatte (25). Das hierzu orthogonal polarisierte Bündel muß den zusätzlichen optischen Weg $nL_5$ durchlaufen, bevor es senkrecht auf die Rückfläche (25b) der Keilplatte (25) trifft und nach Reflexion erneut den optischen Weg $nL_5$ durchläuft. Bei dieser Anordnung muß das Fernrohr aus den Bauteilen (51a und 51b) eine gute Feldkorrektur aufweisen, was jedoch kein Problem darstellt.

Im folgenden wird die Funktionsweise der beiden Wollaston-Prismen (50b und 50d) und der beiden Lambdahalbe-Platten (50a und 50c) beschrieben, zunächst fur eine Einstellung bei der $a' = 0$ resultiert, sodann für einen endlichen Winkel $a' \neq 0$.

Für $a' = 0$ werden die optischen Achsen beider Lambdahalbe-Platten (50a und 50c) parallel zu den Polarisationsrichtungen im einfallenden Bündel eingestellt. Die Kanten der Prismen, aus denen die beiden Wollastonprismen aufgebaut sind, liegen senkrecht zur Zeichenebene der Figur 5. In diesem Fall wird der durch das erste Wollastonprisma eingefuhrte Winkel durch das zweite Wollastonprisma gerade wieder aufgehoben. Es resultiert nur ein kleiner, für die Funktionsweise des Interferometers unwesentlicher Parallelversatz der Bündel. Um diesen Parallelversatz so klein als möglich zu halten, werden die Bauteile (50b,50c und 50d) so dicht als möglich zusammengerückt.

Zur Einstellung eines endlichen Winkels $a'$ werden die beiden Wollastonprismen (50b und 50d) um gleiche Winkel jedoch gegensinnig um die optische Achse verdreht. Die Lambdahalbe-Platte (50a) wird um den halben Drehwinkel des Wollaston-Prismas (50b) (im gleichen Drehsinn!) verdreht, die Lambdahalbe-Platte (50c) bleibt unverändert. Die erste Lambdahalbe-Platte dreht die Polarisationsrichtungen der einfallenden Strahlen parallel zu den Achsen des Wollaston-Prismas (50b), so daß keine Mischung von verzögerter und unverzögerter Welle stattfindet. Die zweite Lambdahalbe-Platte ist stationär; durch sie werden die Polarisationsrichtungen dem Wollaston-Prisma (50d) angepaßt (Schwingungsrichtung parallel und senkrecht zur Prismenkante). Somit wird wieder eine Mischung von verzögerter und unverzögerter Welle vermieden.

Die vom Testobjekt nach senkrechter Reflexion an Vorder- und Rückfläche zurückkehrenden Wellen durchlaufen die Anordnung in umgekehrter Richtung und verlassen sie im ursprünglichen Polarisationszustand.

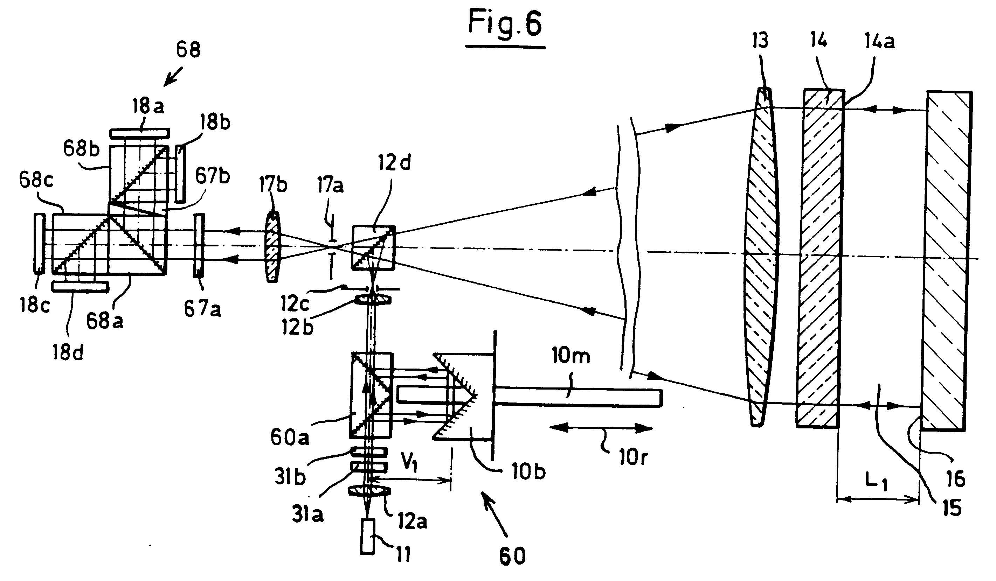

In Figur 6 ist ein Ausführungsbeispiel dargestellt, bei dem keine zeitliche Veränderung der relativen Phasenlage zwischen Vergleichswelle und Prüfwelle erfolgt, sondern bei dem statt dessen mit mehreren ortsauflösenden Empfängern gleichzeitig mehrere Interferogramme gemessen werden, die sich in der relativen Phasenlage zwischen Vergleichswelle und Prüfwelle in definierter Weise unterscheiden. Zur "Markierung" der Phase wird hierbei das Licht in den beiden Teilarmen der Verzögerungseinrichtung (60) verschieden polarisiert. Die Empfängereinrichtung (68) nützt diese "Markierung" von Prüfwelle und Vergleichswelle aus, um durch weitere polarisationsaktive Bauelemente mehrere (z.B. vier) Interferogramme zu erzeugen, die sich in der relativen Phasenlage zwischen Prüfwelle und Vergleichswelle in definierter Weise unterscheiden. Die Wirkungsweise und Auslegung der polarisationsoptischen Bauelemente ist aus der US-PS 4 360 271, die ein Michelson-Interferometer ohne ortsauflösende Empfänger für Zwecke der Längenmeßtechnik behandelt, bekannt. Die Anwendung für Zwecke der interferometrischen Prüftechnik mit ortsauflösenden Empfängern ändert nichts am Modulations- und Decodierungs-Prinzip. Gegenüber der Messung der Interferogramme zeitlich nacheinander ergibt sich bei der Parallelmessung der große Vorteil, das z.B. Erschütterungen die relativen Phasenlagen in allen Meßkanälen in gleicher Weise verändern und daß daher nicht die Phasenbeziehung der Meßkanäle untereinander verändert wird. Daher können hiermit auch zeitlich schnell veränderliche Vorgänge gemessen werden.

Die Methode der Parallel-Messung kann durch die Erfindung auch bei Interferometern angewendet werden, bei denen eine Modulation der Phase durch polarisationsoptische Methoden im Meßteil des Interferometers selbst nicht möglich oder zumindest nicht zweckmäßig ist. Ein typisches Beispiel hierfür stellt wieder das Fizeau-Interferometer nach Figur 1 oder nach Figur 2 dar. Im Fall der Figur 1 müßte z.B. eine Lambdaviertel-Platte in den Luftspalt (15) zwischen die Flächen (14a und 16) eingesetzt werden, um Prüfwelle und Referenzwelle verschieden zu polari-sieren. Dies wäre in hohem Maße unzweckmäßig, da eine so große Lambdaviertel-Platte überhaupt nicht oder nicht mit der erforderlichen Qualität herstellbar wäre. Im Falle der Figur 2 wäre das Einfügen einer solchen Platte zwischen die Flächen (25a und 25b) gar nicht möglich.

In Figur 6 wird die "Markierung" von Prüfwelle und Vergleichswelle durch verschiedene Polarisationszustände in der Verzögerungseinrichtung (60) erreicht. Die Funktionsweise dieser Verzögerungseinrichtung (60) entspricht weitgehend der in Figur 4 gezeigten Verzögerungseinrichtung (40). Gegenüber der Verzögerungseinrichtung (10) der Figur 1 sind der Polarisator (31a) und die Lambdahalbe-Platte (31b) hinzugekommen. Die Teilerschichten der Strahlteiler (60a) wirken hier polarisierend. Der Dachkantspiegel (10b) ist jetzt nicht mehr auf einem Piezoelement montiert. Die Lambdahalbe-Platte (31b) wird so eingestellt, daß das linear polarisierte Licht unter 45° zur Zeichenebene schwingt. Die s-Komponente wird in der Verzögerungseinrichtung (60) gegenüber der p-Komponente um $2nV_1$ verzögert. Die Decodierungseinrichtung besteht aus der Lambdahalbe-Platte (67a), mit der die Schwingungsrichtungen der s-Komponente und der p-Komponente beide gemeinsam um 45° zur Zeichenebene gedreht werden, dem nicht polarisierenden Strahlteilerwürfel (68a), der beide Komponenten aufteilt und den polarisierenden Strahlteilerwürfeln (68b und 68c) zuführt. Zwischen den Strahlteiler (68a) und dem polarisierenden Strahlteiler (68b) ist dabei noch eine Lambdaviertel-Platte (67b) eingefügt, die eine Phasenverzögerung zwischen der s-Komponente und der p-Komponente um pi/2 bewirkt. Die polarisierenden Strahlteiler bewirken schließlich die Entstehung von vier Interferogrammen, bei denen sich die Phasenlage zwischen den zur Interferenz gebrachten, gleich polarisierten Komponenten von Prüfwelle und Referenzwelle um jeweils pi/2 unterscheiden. Diese Interferogramme werden gleichzeitig mit den synchronisierten, ortsauflösenden Empfängern (18a,18b,18c und 18d) gemessen. Wie schon in Figur 1 wird die Prüffläche (16) durch die Linsen (13 und 17b) auf die ortsauflösenden Empfänger (18a,18b,18c,18d) scharf abgebildet. Die Brennweiten der Linsen sowie Objekt- und Bildweite müssen entsprechend gewählt werden. In Figur 6 sind die Verhältnisse aus Grunden der Übersichtlichkeit nicht streng eingehalten.

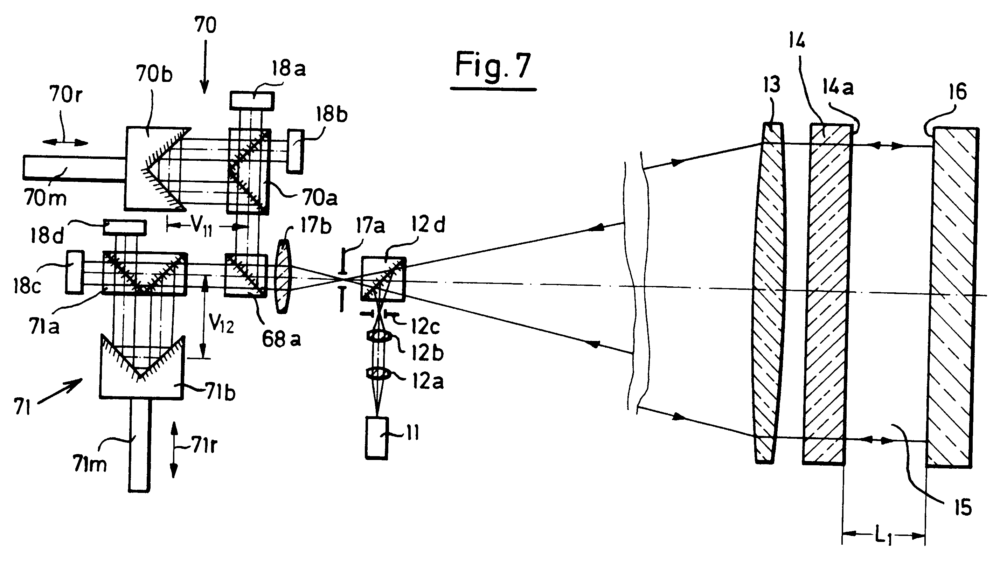

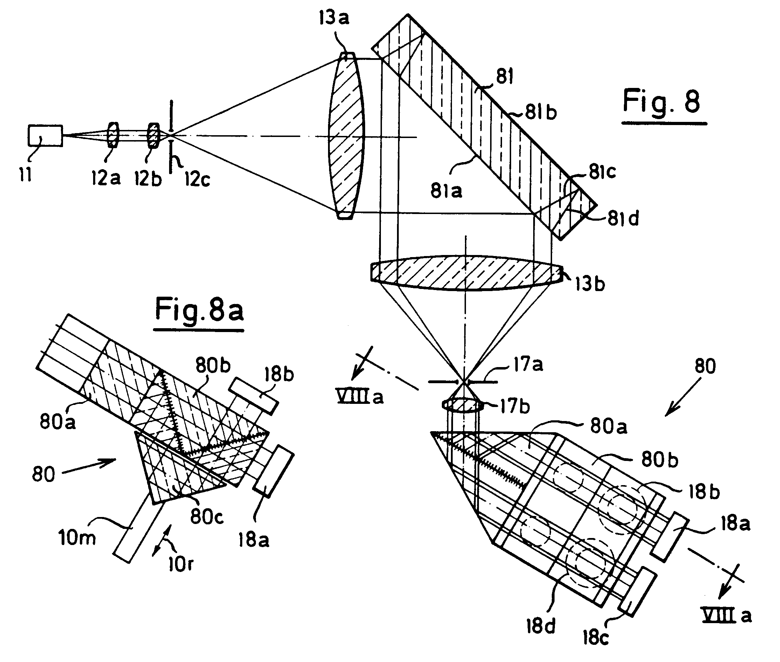

In den Beispielen der Figuren 1,2,4 und 6 befand sich die optische Verzögerungseinrichtung im "Beleuchtungsteil" des Interferometers. Dies hat den Vorteil, daß durch die kleine Lochblende (12c) etwaige unterschiedliche Aberrationen, die in den Teilarmen der Verzögerungseinrichtung entstehen, weitgehend unschädlich gemacht werden können. Außerdem können hier die Strahlquerschnitte besonders klein gehalten werden. Eine Anordnung der Verzögerungseinrichtung im "Beobachtungsteil" des Interferometers eröffnet jedoch eine ganz neue Möglichkeit für die gleichzeitige Erzeugung mehrerer phasenverschobener Interferogramme, ohne daß hierfür polarisationsoptische Methoden herangezogen werden müssen. Das Prinzip wird anhand der Figur 7 beschrieben. In Figur 8 ist eine besonders günstige Ausführungsform dargestellt.

In Figur 7 ist wieder ein Fizeau-Interferometer dargestellt. Der Strahlteiler (68a) teilt die von den Flächen (14a und 16) mit unterschiedlicher Verzögerung reflektierten Teilbündel zunächst in zwei Bündel auf, die den Prismen (70a und 71a) zugeführt werden. Betrachtet wird zunächst das zum Prisma (70a) reflektierte Bündel. Die beiden in ihm enthaltenen Teilstrahlen, die von den Reflexionen an der Prüffläche (16) und der Referenzfläche (14a) stammen, sind zeitlich inkohärent und daher zunächst nicht interferenzfähig. Die erste Teilerfläche des Prismas (70a) teilt beide im Bündel enthaltenen Teilstrahlen im Verhältnis 1:1 auf; die an der Teilerfläche reflektierte Hälfte wird über den Winkelspiegel (70b) der zweiten Teilerfläche des Prismas (70a) zugeführt und dort mit der anderen Hälfte zusammengeführt, die in Transmission durch die erste Teilerfläche des Prismas (70a) ging. Die zusammengeführten beiden Hälften enthalten jetzt einen Anteil, der zeitlich kohärent, also interferenzfähig, ist, da die eine Hälfte der Teilstrahlen, die über den Winkelspiegel (70b) geführt wurde, einen zusätzlichen optischen Weg $2nV_{11}$ durchlaufen hat, der ungefähr dem zusätzlichen optischen Weg $2nL_1$ im Luftspalt zwischen den Flächen (14a und 16) entspricht. Die Differenz der optischen Wege zwischen $2nV_{11}$ und $2nL_1$ muß kleiner sein als die Kohärenzlänge der Lichtquelle. Zur Einstellung der zum jeweiligen Abstand $L_1$ passenden Verzögerung $V_{11}$ ist der Winkelspiegel (70b) entlang der Richtung (70r) auf der Führungsbahn (70m) verschiebbar. Hinter der zweiten Teilerfläche des Prismas (70a) befinden sich die beiden ortsauflösenden Detektoren (18a und 18b), mit denen zwei Interferogramme gleichzeitig gemessen werden. In diesen Interferogrammen unterscheiden sich die Phasendifferenzen zwischen Prüfwelle und Referenzwelle in jedem Punkt um pi. Die Phasendifferenz zwischen den interferierenden kohärenten Anteilen von Prüfwelle und Referenzwelle z.B. auf dem Detektor (18a) kann durch die feinfühlige Justage des Abstandes $V_{11}$ zwischen dem Prisma (70a) und dem Winkelspiegel (70b) kontinuierlich und für das ganze Interferogramm einheitlich verändert werden.

Für das im Teilerwurfel (68a) transmittierte Bündel, das zum Prisma (71a) gelangt und schließlich zu zwei weiteren Interferogrammen führt, die mit den ortsauflösenden Detektoren (18c und 18d) gemessen werden, gilt das oben gesagte sinngemäß. Insbesondere wird hier eine Verzögerung $2nV_{12}$ eingestellt, die

EP 0 281 906 B1

der Verzögerung $2nV_{11}$ ungefähr entspricht. Die Phasenlagen der Interferogramme zwischen den Detektoren (18c und 18d) unterscheiden sich wieder um pi. Um die gewünschte relative Phasenlage zwischen den Detektoren (18a und 18c) von pi/2 zu realisieren, wird z.B. der Winkelspiegel (70b) auf seiner Führungsbahn (70m) feinfühlig verstellt. Nimmt man exakt gleiche Prismen (70a und 71a) an, so würde für die Differenz D zwischen den optischen Weglängen $nV_{11}$ und $nV_{12}$ für den justierten Zustand gelten:

$$D = n \left| V_{11} - V_{12} \right| = \frac{(2l + 1)\lambda}{8},$$

wobei l eine kleine, ganze natürliche Zahl ist. Dabei spielen die Abstände zwischen dem Teilerwürfel (68a) und den Prismen (70a und 71a) für die relative Phasenlage der Interferogramme keine Rolle.

Wie schon in Figur 1 gilt auch hier, daß die Prüffläche (16) scharf auf die Detektoren abgebildet werden sollte, um Beugungsfransen am Prüflingsrand zu vermeiden. Hierzu sind die Brennweiten der Linsen (13 und 17b) passend zu wählen und die optischen Wege, die die Objektweite und die Bildweite ergeben, passend zu justieren. In Figur 7 ist dies aus Gründen der Übersichtlichkeit nicht korrekt dargestellt. Für den optischen Weg, der die Bildweite ergibt, ist dabei der Weg durch die Prismen (70a und 71a) in Transmission zu nehmen. Der kohärente Anteil des an der Referenzfläche (14a) reflektierten Teilstrahls läuft über die Winkelspiegel (70b und 71b). Die Bildweite dieses Bündels ist dann zu groß. Es ist bei unterschiedlichen Brennweiten für (13 und 17b) also nicht möglich, die Referenzfläche (14a) scharf auf den Detektor abzubilden. Hieraus ergeben sich jedoch keine praktischen Nachteile, wenn die Prüffläche (16) etwas kleiner ist als die Referenzfläche (14a), so daß die Fresnelschen Beugungsfransen am Rand des Bildes der Referenzfläche nicht bis in das Bild der Prüffläche reichen.

In den Verzögerungseinrichtungen (70,71) sind zwei verschiedene Verzögerungen des an der Referenzfläche (14a) reflektierten Teilstrahls durch die zusätzlichen optischen Wege $2nV_{11}$ und $2nV_{12}$ vorgesehen, die so abgestimmt werden, daß sich insgesamt die gewünschten relativen Phasenlagen der vier erzeugten Interferogramme von 0, pi/2, pi, 3pi/2 ergeben. Allgemein kann nach diesem Prinzip jedoch auch jede beliebige andere gerade Anzahl von Interferogrammen erzeugt werden.

Die Anordnung von zwei ortsauflösenden Detektoren an den beiden Ausgängen der zweiten Teilerfläche des Prismas (70a oder 71a) hat zwei Vorteile: der zur Verfügung stehende Lichtstrom wird vollständig ausgenützt; die Phasendifferenz von pi zwischen den beiden Interferogrammen gilt exakt und muß nicht erst durch Justage herbeigeführt werden. Trotzdem ist es prinzipiell auch möglich, pro Verzögerungseinheit nur einen ortsauflösenden Detektor zu verwenden. Hierbei wird die Hälfte des Lichtstromes verschenkt, man hat jedoch dann die Möglichkeit, jede gewünschte Phasendifferenz zwischen den gemessenen Interferogrammen zu realisieren. Da für die Auswertung mindestens drei Interferogramme notwendig sind, müssen in diesem Fall mindestens drei Verzögerungseinrichtungen vorgesehen werden.

In Figur 7 erscheinen die Interferogramme auf den ortsauflösenden Detektoren (18a und 18d) gegenüber den Interferogrammen auf den ortsauflösenden Detektoren (18b und 18c) spiegelbildlich. Wenn selbstscannende, synchronisierte Detektoren für die Messung verwendet werden, und beispielsweise durch einen analogen Differenzverstärker sofort die Differenzen der Signale der Detektoren (18a und 18b sowie 18c und 18d) gebildet werden, ist dieser Umstand nachteilig. Eine gleiche (nicht gespiegelte) Orientierung der Interferogramme kann erreicht werden, wenn z.B. zwischen das Prisma (70a) und den Detektor (18a) sowie zwischen das Prisma (71a) und den Detektor (18d) jeweils ein Spiegel eingesetzt wird.

Als weiteres Ausführungsbeispiel ist in Figur 8 ein laterales Scherungsinterferometer mit der planparallelen Scherungsplatte (81) dargestellt. Dieses Scherungsinterferometer hat den Vorzug eines vergleichsweise einfachen Aufbaues, einfacher Justage und geringer Erschütterungsempfindlichkeit. Durch die Verwendung einer massiven Planparallelplatte als Bauteil, das die Aufspaltung der zu prüfenden Wellenfront in zwei lateral gegeneinander gescherte Teilwellenfronten bewirkt, ist die Scherungsdistanz mit hoher Präzision bekannt und kann nicht versehentlich verändert werden. Die Scherungsdistanz ist eine sehr wesentliche Kenngröße bei der späteren rechnerischen Auswertung der Interferogramme.

Scherungsinterferomter benötigen keine Referenzwellenfront, die vom zu prüfenden optischen System unbeeinflußt bleibt, sondern leiten die Referenzwellenfront von der Prüfwellenfront selbst ab. Beim lateralen Scherungsinterferometer in Figur 8 wird die Prüfwellenfront an der Vorderfläche (81a) und der Rückfläche (81b) der Scherplatte (81) reflektiert und dadurch sowohl lateral versetzt als auch zeitlich verzögert. Diese zeitliche Verzögerung ist für die Funktion der Erfindung wesentlich, der laterale Versatz ist für die Funktion als Scherungsinterferometer wesentlich. Die Erfindung kann daher bei allen Scherinterferometern Anwendung finden, bei denen die optischen Wege der beiden gescherten Teilwellen entweder bereits unterschiedlich sind oder unterschiedlich gemacht werden können. Dies ist bei der überwiegenden Anzahl der

9

bekannten Anordnungen der Fall.

Die Erfindung kann bei entsprechend sorgfältiger Justage der Anordnung auch in Verbindung mit Strahlungsquellen von ungewöhnlich kurzer Kohärenzlänge angewendet werden, etwa dem durch ein einfaches Farbfilter auf eine Bandbreite von 100 nm eingeengten Sonnenlicht. Bei einer Schwerpunktswellenlänge von z.B. 500 nm beträgt dann die Kohärenzlänge KL 2500 nm, d.h. es steht mehr als eine Interferenzstreifenperiode (die einem opt. Wegunterschied von 500 nm entspricht) zur Phasenmessung zur Verfügung. Mit einem lateralen Scherungsinterferometer, das im Prinzip wie das nach Figur 8 arbeitet, kann daher z.B. auch die von einem astronomischen Teleskop erzeugte Wellenfront während des Betriebes gemessen werden, wobei ein heller Stern die Lichtquelle darstellt. Dabei wird die Eintrittspupille des Teleskops auf die ortsauflösenden Empfänger (18a,18b,18c,18d) abgebildet, der helle Referenzstern in die Blende (17a). Die Messung der sich schnell ändernden Wellenfront ist z.B. notwendig, um durch Einsatz einer "aktiven optischen Komponente" das durch die Atmosphäre verursachte "seeing" zu kompensieren. Wegen der kleinen benötigten Zeitkonstanten für die Regelung ist es dabei besonders wichtig, mehrere phasenverschobene Interferogramme zu erzeugen, die gleichzeitig ausgelesen werden können.

Zur gleichzeitigen Detektion von vier phasenverschobenen Interferogrammen kommt das schon anhand der Figur 7 beschriebene Prinzip zur Anwendung, hier jedoch in einer anderen Ausführungsform. Die Aufteilung des von der Linse (17b) kollimierten Bündels auf zwei parallele Bündel geschieht jetzt mit einem Kösters-Prisma (80a). Dies ermöglicht, die beiden Strahlteiler (70a und 71a) der Verzögerungseinrichtung der Figur 7 in einem einzigen Bauteil (80b) zusammenzufassen. Die Dachkantspiegel (70b und 71b) der Figur 7 sind jetzt durch ein einziges Dachkantprisma (80c) ersetzt (siehe Figur 8a). Die Summe der optischen Wege (81c und 81d), die eine der Wellen zur Realisierung der lateralen Scherung in der Scherungsplatte (81) zusätzlich durchläuft, entspricht dabei ungefähr dem optischen Weg in dem Dachkantprisma (80c). Zweckmäßigerweise wird dabei der optische Weg in dem Dachkantprisma (80c) etwas kleiner gewählt als der zusätzliche optische Weg in der Scherungsplatte, damit durch Verschiebung des Dachkantprismas (80c) auf der Führungsbahn (10m) entlang der Richtung (10r) die Verzögerung der Verzögerungseinrichtung einjustiert werden kann. Scherungsplatte und Dachkantprisma werden vorteilhafterweise aus der gleichen Glassorte gefertigt. Wesentlich bei der hier beschriebenen Verzögerungseinrichtung (80), durch die insgesamt vier phasenverschobene Interferogramme erzeugt werden, ist, daß die Interferogramme auf den Detektoren (18a und 18c) gegeneinander um einen festen Phasenwinkel phasenverschoben sind (vorzugsweise pi/2). Dasgleiche gilt dann für die Interferogramme auf den Detektoren (18b und 18d). Um dieses Ziel zu erreichen, wird auf die eine Hälfte der Grundseite des Dachkantprismas (Trennlinie verläuft senkrecht zur 90°-Kante des Prismas) eine dünne Schicht aufgedampft, die einen zusätzlichen optischen Weg von $\lambda/4$ für das durchtretende Bündel (jeweils $\lambda/8$ beim Eintritt und beim Austritt des Bündels) darstellt. Bei einer Brechzahl n für die Schicht gilt dann für die Schichtdicke d = $\lambda/[8(n-1)]$. Die Brechzahl n wird dabei so gewählt, daß es möglich ist, anschließend auf die gesamte Grundseite des Dachkantprismas reflexmindernde Schichten aufzudampfen. Die einfachsten Verhältnisse ergeben sich, wenn sich die Brechzahlen der Schicht und des Prismenmaterials möglichst wenig unterscheiden.

In einigen Anwendungsfällen wird es möglich sein, von einer fest vorgegebenen Verzögerung der Wellen im "Meßteil" des Interferometers auszugehen. Dann ist es aus Gründen der Stabilität der Justierung günstiger, das Prisma (80c) mit dem Strahlteiler (80b) fest zu verkitten. In diesem Fall kann der optische Wegunterschied von $\lambda/4$ für die beiden Hälften des Prismas z.B. dadurch erreicht werden, daß eine entsprechende Schicht auf eine Hälfte einer der Kathetenflächen aufgedampft wird.

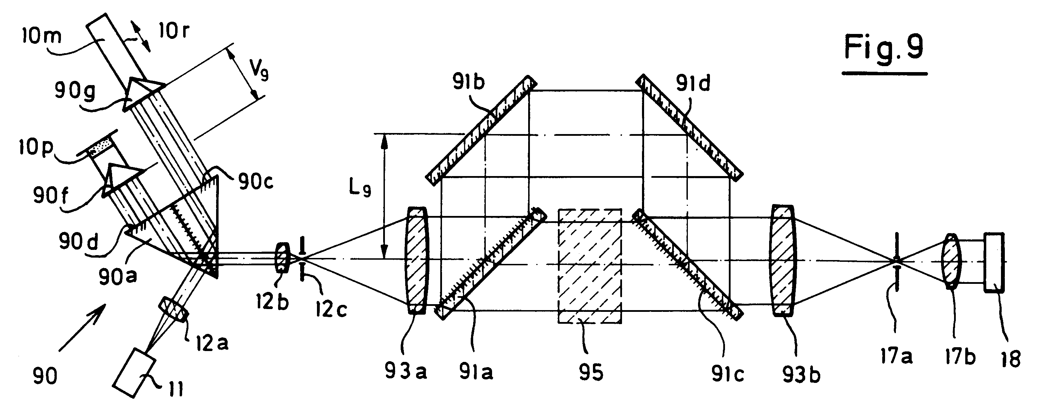

Als letztes Ausführungsbeispiel zeigt Figur 9 die Anwendung der Erfindung bei einem Mach-Zehnder-Interferometer. Dieser Interferometertyp wird oft für Untersuchungen von Grenzschichten, Strömungs- und Konvektionsvorgängen, Temperaturverteilungen und ähnliches in transparenten Gasen oder Flüssigkeiten verwendet. Hierbei werden häufig große Bündelquerschnitte bzw. ein großes "Testvolumen" (95) benötigt. Die Anwendung der Phasenmeßtechnik in der bekannten Weise, bei der die optische Weglänge (und damit die Phase) z.B. des Referenzarms des Interferometers dadurch definiert verändert wird, daß z.B. der große Spiegel (91b) um Bruchteile einer Wellenlänge mechanisch oder piezoelektrisch verschoben wird, scheitert hier an der Größe des Spiegels.

In Figur 9 ist die Verzögerungseinrichtung (90) zwischen der Lichtquelle (11) und der Locblende (12c) angeordnet. Die Kohärenzlänge der Lichtquelle ist wieder geringer als die von der zweiten Teilwelle zusätzlich im Referenzarm des Mach-Zehnder-Interferometers zurückgelegten optischen Lichtwege $2nL_9$. Interferenzfähigkeit zwischen den Teilwellen wird wieder durch die optische Verzögerungseinrichtung (90) hergestellt, die hier aus dem Kösters-Prisma (90a), den beiden Tripelprismen (90f und 90g) sowie den Oberflächenspiegeln (90c und 90d), die auf die Austrittsfläche des Kösters-Prismas aufgedampft sind, besteht. Bei dieser Verzögerungseinrichtung bleiben sowohl Verkippungen als auch laterale Verschiebungen der Tripelprismen ohne schädliche Auswirkung. Das Tripelprisma (90g) ist zur Einstellung der Kohärenz auf einer Führungsbahn (10m) entlang der Richtung (10r) verstellbar, das Tripelprisma (90f) ist zur definierten Veränderung der Phasenlage der Teilwellen auf einem Piezoelement (10p) gelagert. Zur Kompensation des zusätzlichen optischen Weges 2nL$_9$ der zweiten Teilwelle im Mach-Zehnder-Interferometer ist das Tripelprisma (90g) auf der Führungsbahn (10m) entlang der Richtung (10r) um V$_9 \approx$ L$_9/2$ verschoben. Hierbei wurde vorausgesetzt, daß das Medium in dem Testvolumen (95) in etwa die Brechzahl n = 1 besitzt. Ist dies nicht der Fall, kann zur Kompensation in den Referenzarm des Mach-Zehnder-Interferometers zwischen die Spiegel (91b und 91d) ein entsprechendes "Referenzvolumen" eingefügt werden, das mit einem Medium mit der gleichen Brechzahl gefüllt wird.

Die zeitlich verschieden verzögerten Strahlen werden vom Kösters-Prisma (90a) wieder zusammengeführt, und mit den Linsen (12b und 93a) aufgeweitet. Die dazwischenliegende kleine Blende (12c) dient der Säuberung der Strahlen. Das Bündel tritt nun in das Mach-Zehnder-Interferometer aus den beiden Strahlteilern (91a und 91c) sowie den beiden Spiegeln (91b und 91d) ein. Die Abbildung des Testvolumens (95) auf den ortsauflösenden Detektor (18), auf dem die Interferenzen entstehen, erfolgt mit den Linsen (93b und 17b). Die Blende (17a) dient der Ausschaltung etwaiger Störinterferenzen, die von der Rückseite der (leicht keilförmigen) Strahlteilerplatten herrühren können.

## Patentansprüche

1. Interferometer zur Messung von optischen Phasendifferenzen, wobei zwischen zwei Teilstrahlen in einem Meßteil ein optischer Wegunterschied entsteht, mit einer Lichtquelle (11) für kohärente Strahlung, mindestens einem ortsauflösenden Empfänger (18) und mindestens einer optischen Verzögerungseinrichtung (10,20,30,40,60,70, 71,80,90), die den Strahlengang in zwei Teilstrahlen aufspaltet, zwischen diesen Teilstrahlen einen optischen Wegunterschied erzeugt und anschließend die Teilstrahlen wieder kongruent zusammenführt, dadurch gekennzeichnet, daß die Kohärenzlänge der Lichtquelle (11) kleiner ist als der optische Wegunterschied zwischen den beiden Teilstrahlen im Meßteil und daß der in der optischen Verzögerungseinrichtung (10,20,30,40,60,70,71,80,90) erzeugte Wegunterschied ungefähr gleich dem optischen Wegunterschied der Teilstrahlen im Meßteil so gewählt ist, daß die Differenz der optischen Wegunterschiede betragsmäßig kleiner als die Kohärenzlänge der Lichtquelle ist.

2. Interferometer nach Anspruch 1, dadurch gekennzeichnet, daß der optische Wegunterschied der Verzögerungseinrichtung (10,20,30,40,90) um Bruchteile der Wellenlänge der Lichtquelle (11) reproduzierbar veränderbar ist.

3. Interferometer nach Anspruch 1, dadurch gekennzeichnet, daß mehrere ortsauflösende Empfänger (18a,18b,18c,18d) zur gleichzeitigen Messung von mehreren Interferogrammen mit verschiedenen Phasenlagen vorhanden sind und daß polarisationsoptische Mittel (31a,31b,40e) vorgesehen sind, durch welche die in der Verzögerungseinrichtung (40) unterschiedlich verzögerten Teilstrahlen unterschiedlich polarisiert werden.

4. Interferometer nach Anspruch 1, dadurch gekennzeichnet, daß mehrere ortsauflösende Empfänger (18a,18b,18c,18d) zur gleichzeitigen Messung von mehreren Interferogrammen mit verschiedenen Phasenlagen vorhanden sind und daß mindestens zwei optische Verzögerungseinrichtungen (70,71,80) vorgesehen sind, die auf feste Phasendifferenzen gegeneinander einstellbar oder eingestellt sind und daß mindestens bei weniger als drei optischen Verzögerungseinrichtungen optische Mittel zur Erzeugung von Strahlengängen mit weiteren Phasendifferenzen vorgesehen sind.

5. Interferometer nach einem der Ansprüche 1 bis 4, dadurch gekennzeichnet, daß weitere polarisationsoptische Mittel (40a,30d;50b,50d) für eine räumliche oder winkelmäßige Trennung der Teilstrahlen im Meßteil vorgesehen sind.

6. Interferometer nach einem der Ansprüche 1 bis 5, dadurch gekennzeichnet, daß als Lichtquelle (11) eine Spektrallampe vorgesehen ist.

7. Interferometer nach einem der Ansprüche 1 bis 5, dadurch gekennzeichnet, daß als Lichtquelle (11) ein Laser vorgesehen ist.

**8.** Interferometer nach einem der Ansprüche 1 bis 5, dadurch gekennzeichnet, daß als Lichtquelle (11) ein Kontinuumstrahler, z.B. eine Halogenlampe, vorgesehen ist, die mit einem schmalbandigen Interferenzfilter, z.B. mit einer Halbwertsbreite von 0,5 nm kombiniert ist.

**9.** Interferometer nach einem der Ansprüche 6 bis 8, dadurch gekennzeichnet, daß die Lichtquelle (11) eine Kohärenzlänge von ca. 2 mm hat.

**Claims**

**1.** Interferometer for measuring optical phase differences, whereby an optical part difference accurs between two partial beams within a measuring part, with a light source (11) for partial coherent radiation, at least one spatially-resolving receiver (18) and at least one optical delay means (10, 20, 30, 40, 60, 70, 71, 80, 90) which devides the optical beam path into two partial beams, generates an optical path difference between this partial beams and subsequently recombines the partial beams congruently, characterized in that the coherence length of the light source (11) is smaller than the optical path difference between the partial beams in the measuring part and that the path difference generated within the optical delay means (10, 20, 30, 40, 60, 70, 71, 80, 90) is chosen nearly equal to the optical path difference of the partial beams in the measuring part so that the difference of the optical path differences has an absolute value smaller than the coherence length of the light source.

**2.** Interferometer according to claim 1 characterized in that the optical path difference of the delay means (10, 20, 30, 40, 90) is reproducibly changeable within fractions of the wavelength of the light source (11).

**3.** Interferometer according to claim 1, characterized in that a plurality of spatially resolving receivers (18a, 18b, 18c, 18d) is provided for simultaneous measurement of a plurality of interferograms having different phase positions and that polarizing optical means (31a, 31b, 40e) are provided by which the partial beams being differently delayed within the delay means (40) are differently polarized.

**4.** Interferometer according to claim 1, characterized in that a plurality of spatially resolving detectors (18a, 18b, 18c, 18d is provided for simultaneous measurement of a plurality of interferograms having different phase positions and that at least two optical delay means (70, 71, 80) are provided which are adjustable or are adjusted to fixed phase differences and that at least, if less than three optical delay means are provided, further optical means are provided for generating beam paths with further phase differences.

**5.** Interferometer according to one of the claims 1 to 4, characterized in that further polarization optical means (40a, 30d; 50b, 50d) are provided for obtaining a spatial or angular separation of the partial beams within the measuring part.

**6.** Interferometer according to one of the claims 1 to 5, characterized in that a spectral lamp is provided for the light source (11).

**7.** Interferometer according to one of the claims 1 to 5, characterized in, that a laser is provided for the light source (11).

**8.** Interferometer according to one of the claims 1 to 5, characterized in that the light source (11) is a continuum radiator, for example an halogen lamp, which is combined with a narrow band interference filter, for example having an half-value width of 0.5 nm.

**9.** Interferometer according to one of the claims 6 to 8, characterized in that the light source (11) has a coherence lengths of approximately 2mm.

**Revendications**

**1.** Interféromètre pour la mesure de différences de phase optiques, lors de laquelle une différence de trajet optique apparaît entre deux faisceaux partiels dans une unité de mesure, comportant une source de lumière (11) servant à délivrer un rayonnement cohérent, au moins un récepteur (18) à résolution locale et au moins un dispositif de retardement optique (10,20,30,40,60,70,71,80, 90), qui divise le trajet du faisceau en deux faisceaux partiels, produit entre ces faisceaux partiels une différence de trajet optique et réunit ensuite les faisceaux partiels à nouveau de façon congruente, caractérisé en ce que la longueur de cohérence de la source de lumière (11) est inférieure à la différence de trajet optique entre les deux faisceaux partiels dans l'unité de mesure et que la différence de trajet, qui est produite dans le dispositif de retardement optique (10,20,30,40,60, 70,71,80,90) est choisie approximativement égale à la différence de trajet optique des faisceaux partiels dans l'unité de mesure, de sorte que la valeur absolue de la différence entre les différences de trajet optique est inférieure à la longueur de cohérence de la source de lumière.

2. Interféromètre suivant la revendication 1, caractérisé par le fait que la différence de trajet optique produite dans le dispositif de retardement (10,20,30,40,90) est modifiable, de façon reproductible, selon des fractions de la longueur d'onde de la source de lumière (11).

3. Interféromètre suivant la revendication 1, caractérisé en ce qu'il est prévu plusieurs récepteurs (18a,18b,18c,18d) à résolution locale servant à mesurer simultanément plusieurs interférogrammes ayant des positions de phase différentes, et qu'il est prévu des moyens de polarisation optiques (31a,31b,40e), grâce auxquels les faisceaux partiels, qui sont retardés différemment dans le dispositif de retardement (40), sont polarisés différemment.

4. Interféromètre suivant la revendication 1, caractérisé en ce qu'il est prévu plusieurs récepteurs (18a,18b,18c,18d) à résolution locale servant à mesurer simultanément plusieurs interférogrammes ayant des positions de phase différentes, et qu'il est prévu deux dispositifs optiques de retardement (70,71,80), qui peuvent être réglés ou sont réglés réciproquement sur des différences de phase fixes et qu'au moins dans le cas de moins de trois dispositifs de retardement optique, il est prévu des moyens optiques servant à produire des trajets de rayonnement présentant d'autres différences de phase.

5. Interféromètre selon l'une des revendications 1 à 4, caractérisé en ce qu'il est prévu d'autres moyens de polarisation optique (40a,40d; 50b,50d) servant à réaliser une séparation spatiale ou angulaire des faisceaux partiels dans l'unité de mesure.

6. Interféromètre selon l'une des revendications 1 à 5, caractérisé en ce qu'il est prévu comme source de lumière (11) une lampe spectrale.

7. Interféromètre selon l'une des revendications 1 à 5, caractérisé en ce qu'il est prévu comme source de lumière (11) un laser.

8. Interféromètre selon l'une des revendications 1 à 5, caractérisé en ce qu'il est prévu comme source de lumière (11) une source à fond continu, par exemple une lampe à halogène, qui est combinée à un filtre interférentiel à bande étroite, possédant par exemple une largeur de valeur moyenne égale à 0,5 nm.

9. Interféromètre selon l'une des revendications 6 à 8, caractérisé en ce que la source de lumière (11) possède une longueur de cohérence égale à environ 2 mm.

# Fig.1

EP 0 281 906 B1

# Fig.2

EP 0 281 906 B1

# Fig. 3

EP 0 281 906 B1

Fig.4

Fig.5

Fig.6

Fig. 7

EP 0 281 906 B1

Fig. 8

Fig. 8a

Fig.9